# EUROPEAN PATENT APPLICATION

(11) **EP 3 920 305 A1**
(43) Date of publication of application: **08.12.2021**
(21) Application number: 20920753.9
(22) Date of filing: 18.03.2020
(51) Int. Cl.: H01M 10/0587

(54) **ELECTRODE ASSEMBLY, AND BATTERY HAVING ELECTRODE ASSEMBLY**

(71) Applicant: Ningde Amperex Technology Ltd., Ningde City, Fujian 352100 (CN)
(72) Inventor: YU, Shuxian, Ningde Fujian 350900 (CN); WANG, Kun, Ningde Fujian 350900 (CN); QIN, Yiming, Ningde Fujian 350900 (CN); MING, Bangsheng, Dongguan Guangdong 523000 (CN)
(74) Representative: Icosa
(86) International application number: PCT/CN2020/080064
(87) International publication number: WO 2021/184267

(57) **Abstract**

An electrode assembly is disclosed, including a jelly roll formed by winding a first electrode plate, a separator, and a second electrode plate that are stacked. The first electrode plate includes a first current collector and a first active material layer disposed on both surfaces of the first current collector. The first current collector includes a first single-surface-coated region and a first blank region connected to the first single-surface-coated region. A surface of the first single-surface-coated region, the surface that faces back from a center of the jelly roll, is not provided with the first active material layer. The first single-surface-coated region and the first blank region are located on an outermost coil of the jelly roll. The electrode assembly further includes a polymer layer. The polymer layer is disposed on both surfaces of the first blank region and the surface of the first single-surface-coated region, the surface that faces back from the center of the jelly roll. This application further provides a battery containing the electrode assembly.

## Description

### TECHNICAL FIELD

This application relates to the field of batteries, and in particular, to an electrode assembly and a battery containing the electrode assembly.

### BACKGROUND

Lithium-ion batteries are widely applied in various portable electronic devices by virtue of advantages such as high energy density, high volumetric energy density, and long cycle life. Rapid development of the portable electronic devices imposes higher requirements on the battery. However, currently, electrode plates in the battery often suffer from deformation and tearing after repeated cycles, thereby severely affects the cycle life and safety performance of the battery.

### SUMMARY

In view of the foregoing situation, it is necessary to provide an electrode assembly to solve the foregoing problems.

This application further provides a battery containing the electrode assembly.

An electrode assembly is disclosed, including a jelly roll formed by winding a first electrode plate, a separator, and a second electrode plate that are stacked. The first electrode plate includes a first current collector and a first active material layer disposed on both surfaces of the first current collector. The first current collector includes a first single-surface-coated region and a first blank region connected to the first single-surface-coated region. A surface of the first single-surface-coated region is not provided with the first active material layer, wherein the surface of the first single-surface coated region faces back from a center of the jelly roll.

The first single-surface-coated region and the first blank region are located on an outermost coil of the jelly roll.

The electrode assembly further includes a polymer layer. The polymer layer is disposed on both surfaces of the first blank region and the surface of the first single-surface-coated region, wherein the surface of the first-surface coated region faces back from the center of the jelly roll. Optionally, the first current collector further includes a first double-surface-coated region that extends from a winding initiation end of the first electrode plate to the first single-surface-coated region. The polymer layer is further disposed on both surfaces of the first double-surface-coated region.

Optionally, the jelly roll includes a straight region and a corner region located at both ends of the straight region, and the polymer layer is further disposed on the first electrode plate located in the corner region. Optionally, the first electrode plate is a negative electrode plate.

Optionally, the polymer layer is polyvinylidene difluoride, styrene butadiene rubber, carboxymethyl cellulose, polyacrylic acid, polyacrylonitrile, or polyacrylate.

Optionally, a weight of paint that forms the polymer layer is 1 mg/1540.25 mm² to 5 mg/1540.25 mm².

Optionally, the electrode assembly further includes a bonding piece, and the bonding piece is disposed between the polymer layer and the first electrode plate.

Optionally, the bonding piece is polyvinyl alcohol or polytetrafluoroethylene.

A battery is disclosed, including a package and an electrolytic solution accommodated in the package. The battery further includes the foregoing electrode assembly, and the electrode assembly is accommodated in the package.

Optionally, a thickness of the polymer layer is 1.7 µm to 8.5 µm after chemical formation of the battery.

In conclusion, by disposing the polymer layer on both surfaces of the first blank region and the surface of the first single-surface-coated region which faces back from the center of the jelly roll, this application increases a gap between the first electrode plate and the second electrode plate, and makes space for expansion of the first electrode plate and the second electrode plate during cycles. This reduces risks of deformation and tearing of the first electrode plate and the second electrode plate caused by expansion during cycles, and effectively improves the cycle life and safety performance of the battery. In addition, the polymer layer disposed on the outermost coil of the jelly roll also serves a function of heat insulation.

### BRIEF DESCRIPTION OF DRAWINGS

FIG. 1 is a schematic structural diagram of a battery according to an embodiment of this application;
FIG. 2 is a partial schematic cross-sectional view of the first electrode plate shown in FIG. 1;
FIG. 3 is a partial schematic cross-sectional view of a first electrode plate according to an embodiment of this application;
FIG. 4 is a schematic structural diagram of an electrode assembly according to an embodiment of this application;
FIG. 5 is a partial schematic cross-sectional view of a jelly roll according to an embodiment of this application;
FIG. 6 is a schematic cross-sectional view of the second electrode plate shown in FIG. 1;
FIG. 7 is a partial scanning electron microscopy image of a polymer layer on a first electrode plate before chemical formation according to Embodiment 3;
FIG. 8 is a partial scanning electron microscopy image of a polymer layer on a first electrode plate after chemical formation according to Embodiment 3;
FIG. 9 is an elemental analysis spectrum diagram of a first electrode plate after chemical formation according to Embodiment 3;
FIG. 10 is an elemental analysis spectrum diagram of a first electrode plate after chemical formation according to Embodiment 4;
FIG. 11 is a cycle performance diagram of a battery 100 according to Embodiment 3 and Comparative Embodiment 1;
FIG. 12 is a CT image of a battery 100 according to Comparative Embodiment 1; and
FIG. 13 is a CT image of a battery 100 according to Embodiment 3.

### Reference numerals:

Battery 100
Electrode assembly 10
First electrode plate 11
First current collector 111
First single-surface-coated region 1111
First blank region 1112
First double-surface-coated region 1113
First active material layer 112
Separator 12
Second electrode plate 13
Second current collector 131
Second blank region 1311
Second single-surface-coated region 1312
Second double-surface-coated region 1313
Second active material layer 132
Jelly roll 14
Straight region 141
Corner region 142
Polymer layer 15
Bonding piece 16
Package 20
Electrolytic solution 30

This application is further described below with reference to the following specific embodiments and the foregoing drawings.

### DETAILED DESCRIPTION OF EMBODIMENTS

The following clearly and fully describes the technical solutions in the embodiments of this application with reference to the drawings hereof. Apparently, the described embodiments are merely a part of but not all of the embodiments of this application. All other embodiments derived by a person of ordinary skill in the art based on the embodiments of this application without making any creative efforts shall fall within the protection scope of this application.

Unless otherwise defined, all technical and scientific terms used herein have the same meanings as usually understood by a person skilled in the technical field of this application. The terms used in the specification of this application herein are merely intended for describing specific embodiments but are not intended to limit this application.

The following describes some embodiments of this application in detail with reference to drawings. To the extent that no conflict occurs, the following embodiments and the features in the embodiments may be combined with each other.

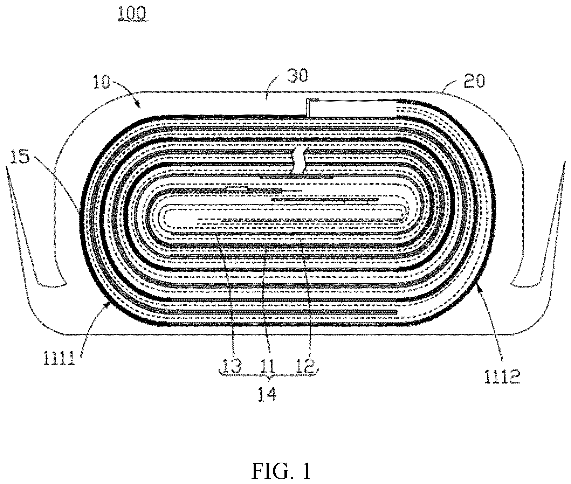

Referring to FIG. 1, an embodiment of this application provides a battery 100, including an electrode assembly 10, a package 20, and an electrolytic solution 30 accommodated in the package 20. In an embodiment, the battery 100 is a lithium-ion battery.

The electrode assembly 10 is accommodated in the package 20. In this embodiment, the electrode assembly 10 includes a jelly roll 14 formed by winding a first electrode plate 11, a separator 12, and a second electrode plate 13 that are stacked, and includes a polymer layer 15. The separator 12 is located between the first electrode plate 11 and the second electrode plate 13.

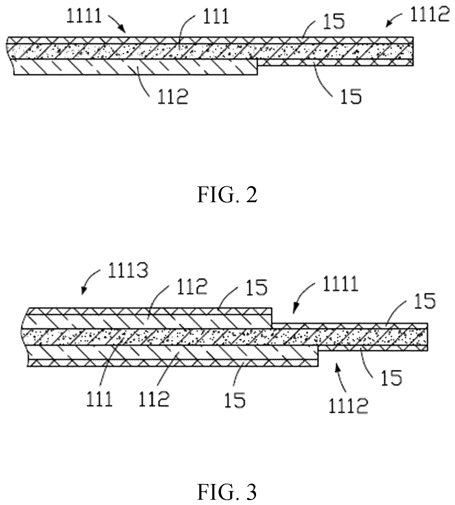

Referring to FIG. 2, the first electrode plate 11 includes a first current collector 111 and a first active material layer 112 disposed on both surfaces of the first current collector 111. In an embodiment, the first electrode plate 11 is a negative electrode plate.

Referring to FIG. 1 and FIG. 2, the first current collector 111 includes a first single-surface-coated region 1111 and a first blank region 1112 connected to the first single-surface-coated region 1111. The first single-surface-coated region 1111 and the first blank region 1112 are located on an outermost coil of the jelly roll 14. A surface of the first single-surface-coated region 1111, the surface that faces back from a center of the jelly roll 14, is not provided with the first active material layer 112. Neither surface of the first blank region 1112 is provided with the first active material layer 112.

Referring to FIG. 1 and FIG. 2, the polymer layer 15 is disposed on both surfaces of the first blank region 1112 and the surface of the first single-surface-coated region 1111, the surface that faces back from the center of the jelly roll 14. The polymer layer 15 is polyvinylidene difluoride, styrene butadiene rubber, carboxymethyl cellulose, polyacrylic acid, polyacrylonitrile, or polyacrylate.

Specifically, formation of the polymer layer 15 includes the following steps:
first, cold-calendering the first electrode plate 11; then, evenly spraying paint onto both surfaces of the first blank region 1112 and the surface of the first single-surface-coated region 1111, where the surface faces back from the center of the jelly roll 14, and the paint is the paint that forms the polymer layer 15; and, finally, drying the paint on the first single-surface-coated region 1111 and the first blank region 1112 to form the polymer layer 15. When chemical formation is performed on the battery 100, the polymer layer 15 melts and diffuses at a high temperature. In this way, the polymer layer 15 becomes thinner than a dried polymer layer, thereby increasing the gap between the first electrode plate 11 and the second electrode plate 13, and making space for expansion of the first electrode plate 11 and the second electrode plate 13 during cycles. This reduces risks of deformation and tearing of the first electrode plate 11 and the second electrode plate 13 caused by expansion during cycles, and effectively improves the cycle life and safety performance of the battery 100. In addition, the polymer layer 15 disposed on the outermost coil of the jelly roll 14 also serves a function of heat insulation.

In this embodiment, a weight of the paint that forms the polymer layer 15 by spraying is controlled to be 1 mg/1540.25 mm² to 5 mg/1540.25 mm². A thickness of the polymer layer 15 is 1.7 µm to 8.5 µm after chemical formation of the battery 100. In an embodiment, the weight of the paint that forms the polymer layer 15 by spraying is 1.5 mg/1540.25 mm². In another embodiment, the weight of the paint that forms the polymer layer 15 by spraying is 2 mg/1540.25 mm². In another embodiment, the weight of the paint that forms the polymer layer 15 by spraying is 2.5 mg/1540.25 mm². In another embodiment, the weight of the paint that forms the polymer layer 15 by spraying is 3 mg/1540.25 mm².

In an embodiment, referring to FIG. 3, the first current collector 111 further includes a first double-surface-coated region 1113 that extends from a winding initiation end of the first electrode plate 11 to the first single-surface-coated region 1111. Both surfaces of the first double-surface-coated region 1113 are provided with the first active material layer 112. The polymer layer 15 is further disposed on both surfaces of the first double-surface-coated region 1113 to further avoid risks of deformation and tearing of the first electrode plate 11 and the second electrode plate 13 caused by expansion during cycles.

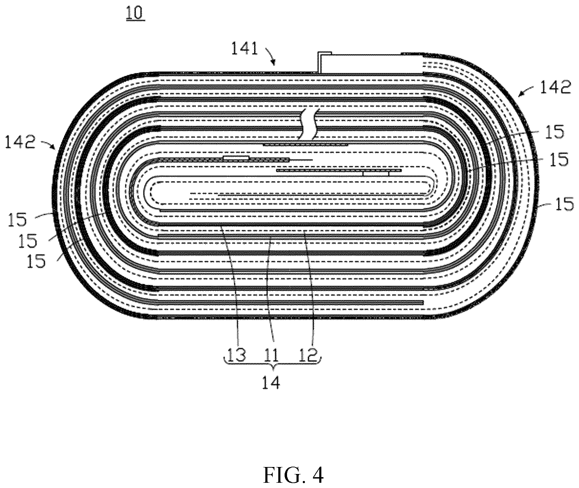

In another embodiment, referring to FIG. 4, the jelly roll 14 includes a straight region 141 and a corner region 142 located at both ends of the straight region 141. The polymer layer 15 is further disposed on the first electrode plate 11 located in the corner region 142. In the corner region 142, a gap between the first electrode plate 11 and the second electrode plate 13 is small. Therefore, an electrolytic solution 30 is squeezed out, and a lithium plating problem occurs at the corner region 142 due to a lack of the electrolytic solution 30, thereby affecting cycle performance of the battery 100. In view of this, the polymer layer 15 is disposed on the first electrode plate 11 located in the corner region 142. Therefore, during chemical formation of the battery 100, the gap between the first electrode plate 11 and the second electrode plate 13 in the corner region 142 is enlarged due to melting and diffusion of the polymer layer 15 under a high temperature, thereby effectively avoiding the lithium plating problem in the corner region 142 and greatly improving the cycle performance of the battery 100.

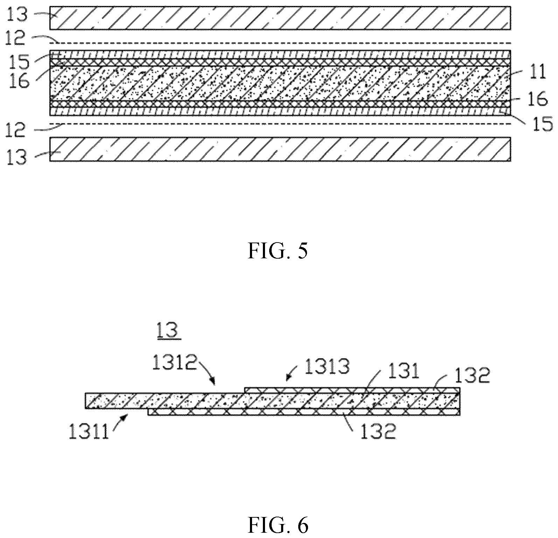

Referring to FIG. 5, the electrode assembly 10 further includes a bonding piece 16. The bonding piece 16 is disposed between the polymer layer 15 and the first electrode plate 11 to strengthen a bonding force between the polymer layer 15 and the first electrode plate 11. The bonding piece 16 is polyvinyl alcohol or polytetrafluoroethylene.

The following describes the battery 100 in this application in detail with reference to embodiments.

### Embodiment 1

Referring to FIG. 1, a battery 100 including a package 20, and an electrolytic solution 30 and an electrode assembly 10 that are accommodated in the package 20.

The electrode assembly 10 includes a polymer layer 15, and a jelly roll 14 formed by winding a first electrode plate 11, a separator 12, and a second electrode plate 13 that are stacked. The separator 12 is located between the first electrode plate 11 and the second electrode plate 13.

Referring to FIG. 2, the first electrode plate 11 includes a first current collector 111 and a first active material layer 112 disposed on both surfaces of the first current collector 111. In Embodiment 1, the first electrode plate 11 is a negative electrode plate.

Referring to FIG. 1 and FIG. 2, the first current collector 111 includes a first single-surface-coated region 1111 and a first blank region 1112 connected to the first single-surface-coated region 1111. The first single-surface-coated region 1111 and the first blank region 1112 are located on an outermost coil of the jelly roll 14. A surface of the first single-surface-coated region 1111, the surface that faces back from a center of the jelly roll 14, is not provided with the first active material layer 112.

Referring to FIG. 6, the second electrode plate 13 includes a second current collector 131 and a second active material layer 132 disposed on both surfaces of the second current collector 131. In Embodiment 1, the second current collector 131 includes a second blank region 1311, a second single-surface-coated region 1312, and a second double-surface-coated region 1313 that are disposed sequentially. Neither surface of the second blank region 1311 is provided with the second active material layer 132. A surface of the second single-surface-coated region 1312, the surface that faces a center of the jelly roll 14, is not provided with the second active material layer 132. Both surfaces of the second double-surface-coated region 1313 are provided with the second active material layer 132.

The polymer layer 15 is disposed on both surfaces of the first blank region 1112 and the surface of the first single-surface-coated region 1111, the surface that faces back from the center of the jelly roll 14. The polymer layer 15 is polyvinylidene difluoride.

In Embodiment 1, formation of the polymer layer 15 includes the following steps:

first, cold-calendering the first electrode plate 11; then, evenly spraying polyvinylidene difluoride onto both surfaces of the first blank region 1112 and the surface of the first single-surface-coated region 1111, where the surface faces back from the center of the jelly roll 14, and a weight of the sprayed polyvinylidene difluoride is controlled to be 1.5 mg/1540.25 mm²; and, finally, drying the polyvinylidene difluoride on the first single-surface-coated region 1111 and the first blank region 1112 to form the polymer layer 15. A thickness of a single surface of the dried polymer layer 15 is 260 µm.

In Embodiment 1, after chemical formation of the battery 100, the thickness of the polymer layer is reduced to 2.6 µm.

### Embodiment 2

Embodiment 2 differs from Embodiment 1 in a location of the polymer layer 15.

In Embodiment 2, referring to FIG. 4, the jelly roll 14 includes a straight region 141 and a corner region 142 located at both ends of the straight region 141.

In contrast with Embodiment 1, the polymer layer 15 in Embodiment 2 is further disposed on the first electrode plate 11 located in the corner region 142.

### Embodiment 3

Embodiment 3 differs from Embodiment 1 in a location of the polymer layer 15 and a structure of the first electrode plate 11.

In Embodiment 3, referring to FIG. 3, the first current collector 111 further includes a first double-surface-coated region 1113 that extends from a winding initiation end of the first electrode plate 11 to the first single-surface-coated region 1111.

Referring to FIG. 3, in contrast with Embodiment 1, the polymer layer 15 in Embodiment 3 is further disposed on both surfaces of the first double-surface-coated region 1113.

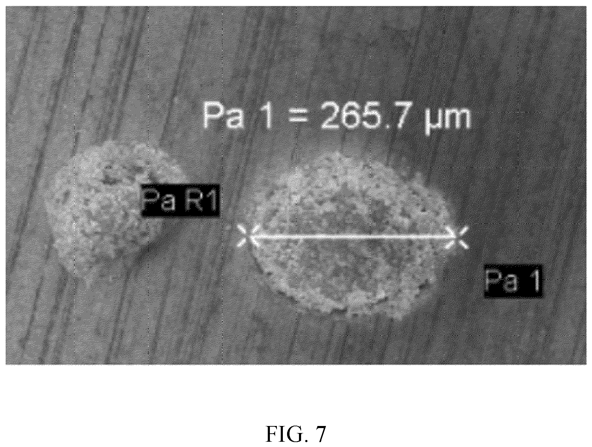

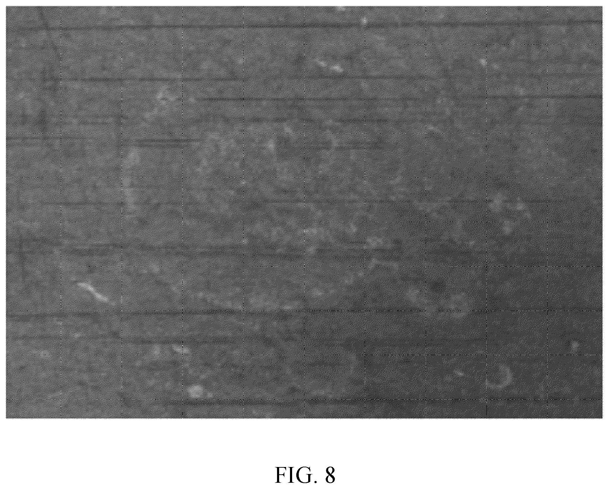

A scanning electron microscopy image shown in FIG. 7 is obtained by photographing the first electrode plate 11 before chemical formation in Embodiment 3 with a scanning electron microscope. A scanning electron microscopy image shown in FIG. 8 is obtained by photographing the first electrode plate 11 after chemical formation in Embodiment 3 with the scanning electron microscope. As can be learned from FIG. 7 and FIG. 8, particles of the polyvinylidene difluoride on the surface of the first electrode plate 11 after the chemical formation are significantly smaller than those before the chemical formation. In other words, the thickness of the polymer layer 15 is reduced, thereby increasing the gap between the first electrode plate 11 and the second electrode plate 13, and making space for expansion of the first electrode plate 11 and the second electrode plate 13 during cycles.

### Embodiment 4

Embodiment 4 differs from Embodiment 3 in: the weight of the polyvinylidene difluoride sprayed in Embodiment 4 is controlled to be 2.5 mg/1540.25 mm².

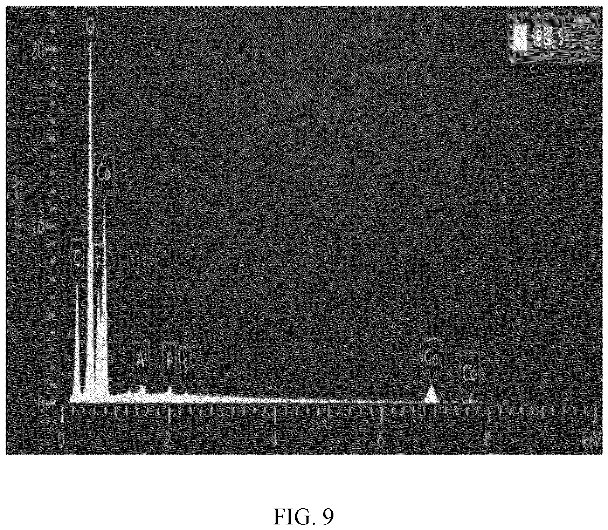

Elemental analysis is performed on the first electrode plate 11 in the battery 100 after chemical formation in Embodiment 3 by using an energy spectrometer, so as to obtain a spectrum shown in FIG. 9.

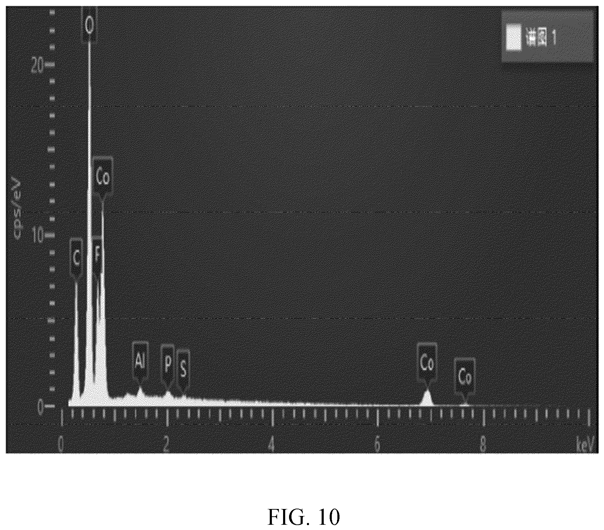

Elemental analysis is performed on the first electrode plate 11 in the battery 100 after chemical formation in Embodiment 4 by using the energy spectrometer, so as to obtain a spectrum shown in FIG. 10.

Analysis of FIG. 9 and FIG. 10 shows that composition of the first electrode plate 11 after chemical formation is not changed after the weight of the sprayed polyvinylidene difluoride is changed.

### Comparative Embodiment 1

Comparative Embodiment 1 differs from Embodiment 3 in that the battery 100 in Comparative Embodiment 1 includes no polymer layer 15.

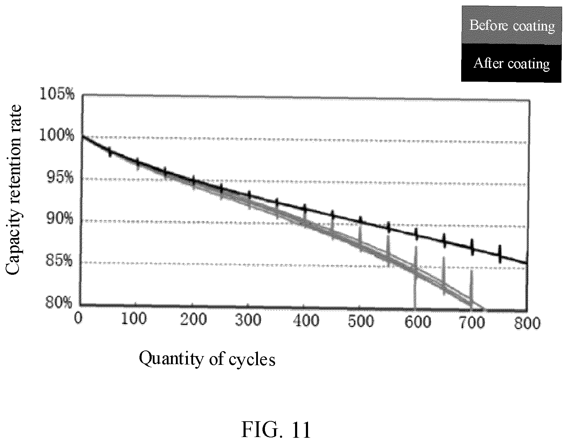

Referring to FIG. 11, a black line is a change curve of a capacity retention rate of the battery 100 in Embodiment 3 after different cycles, and a gray line is a change curve of the capacity retention rate of the battery 100 in Comparative Embodiment 1 after different cycles. As can be learned from the two lines, the disposed polymer layer 15 can further improve the cycle performance of the battery 100.

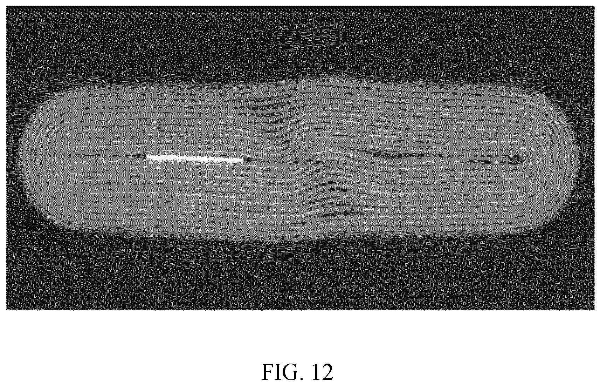

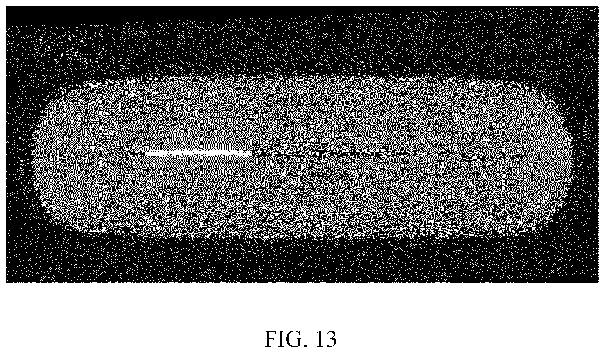

FIG. 12 and FIG. 13 are a CT image of the battery 100 in Comparative Embodiment 1 and a CT image of the battery 100 in Embodiment 3 respectively after an identical quantity of cycles are completed. FIG. 12 shows that electrode plates in Comparative Embodiment 1 are severely deformed. FIG. 13 shows that the electrode plates in Embodiment 3 are flat without deformation. Therefore, the disposed polymer layer 15 can further solve the problems of deformation and tearing of the electrode plates caused by expansion during cycles.

A hot oven test is performed on the batteries 100 disclosed in Embodiment 3 and Comparative Embodiment 1. Specifically, the test includes the following steps:
placing fully charged batteries 100 in Comparative Embodiment 1 and Embodiment 3 into a hot oven separately, and then increasing the temperature from a normal temperature to 130 °C, 132 °C, or 135 °C at a speed of 5±2 °C/min, and maintaining the temperature for 30 minutes. If the battery 100 does not catch fire or explode, it is determined that the battery 100 has passed the hot oven test.

**Table 1**

| | 130°C | 132°C | 135°C |
|---|---|---|---|
| Embodiment 3 | 100% | 100% | 100% |
| Comparative Embodiment 1 | 100% | 30% | 0% |

Table 1 shows hot oven test results (pass rates) of the batteries 100 disclosed in Comparative Embodiment 1 and Embodiment 3 and tested at different temperatures. As can be seen, the disposed polymer layer 15 also brings some effects of heat insulation.

The foregoing embodiments are merely intended for describing the technical solutions of this application but not intended as a limitation. Although this application is described in detail with reference to the foregoing optional embodiments, a person of ordinary skill in the art understands that modifications or equivalent substitutions may be made to the technical solutions of this application without departing from the spirit and conception of the technical solutions of this application.

## Claims

1. An electrode assembly, comprising a jelly roll formed by winding a first electrode plate, a separator, and a second electrode plate that are stacked, wherein the first electrode plate comprises a first current collector and a first active material layer disposed on both surfaces of the first current collector; the first current collector comprises a first single-surface-coated region and a first blank region connected to the first single-surface-coated region; and a surface of the first single-surface-coated region is not provided with the first active material layer, wherein the surface of the first single-surface coated region faces back from a center of the jelly roll, **characterized in that**:
the first single-surface-coated region and the first blank region are located on an outermost coil of the jelly roll;
the electrode assembly further comprises a polymer layer, wherein the polymer layer is disposed on both surfaces of the first blank region and the surface of the first single-surface-coated region, wherein the surface of the first single-surface coated region faces back from the center of the jelly roll.

2. The electrode assembly according to claim 1, wherein the first current collector further comprises a first double-surface-coated region that extends from a winding initiation end of the first electrode plate to the first single-surface-coated region, and the polymer layer is further disposed on both surfaces of the first double-surface-coated region.

3. The electrode assembly according to claim 1, wherein the jelly roll comprises a straight region and a corner region located at both ends of the straight region, and the polymer layer is further disposed on the first electrode plate located in the corner region.

4. The electrode assembly according to any one of claims 1 to 3, wherein the first electrode plate is a negative electrode plate.

5. The electrode assembly according to any one of claims 1 to 3, wherein the polymer layer is polyvinylidene difluoride, styrene butadiene rubber, carboxymethyl cellulose, polyacrylic acid, polyacrylonitrile, or polyacrylate.

6. The electrode assembly according to claim 5, wherein a weight of paint that forms the polymer layer is 1 mg/1540.25 mm² to 5 mg/1540.25 mm².

7. The electrode assembly according to any one of claims 1 to 3, wherein the electrode assembly further comprises a bonding piece, and the bonding piece is disposed between the polymer layer and the first electrode plate.

8. The electrode assembly according to claim 7, wherein the bonding piece is polyvinyl alcohol or polytetrafluoroethylene.

9. A battery, comprising a package and an electrolytic solution accommodated in the package, wherein the battery further comprises the electrode assembly according to any one of claims 1 to 8, and the electrode assembly is accommodated in the package.

10. The battery according to claim 9, wherein a thickness of the polymer layer is 1.7 µm to 8.5 µm after chemical formation of the battery.
